# EUROPEAN PATENT APPLICATION

(11) **EP 4 847 389 A1**
(43) Date of publication of application: **02.12.2026**
(21) Application number: 26182123.5
(22) Date of filing: 29.05.2026
(51) Int. Cl.: B64D 29/08, B64D 29/06, B64C 11/00

(54) **NACELLE STRUCTURE WITH COWL DOORS FOR OPEN ROTOR PROPULSION SYSTEM**

(30) Priority: 29.05.2025 US 202519222491
(71) Applicant: RTX Corporation, Farmington, CT 06032 (US)
(72) Inventor: YAZICI, Murat, Glastonbury, 06033 (US); MORTON, Jeffrey T., Manchester, 06040 (US)
(74) Representative: Dehns

(57) **Abstract**

An aircraft (20) system includes an open propulsor rotor (66), a turbine engine (64) and a housing structure (90). The turbine engine (64) includes a compressor section (103), a combustor section (104) and a turbine section (105). The housing structure (90) includes an engine case (134), a nacelle structure (136) and a compartment (137). The engine case (134) houses the compressor section (103), the combustor section (104) and the turbine section (105). The nacelle structure (136) includes a first cowl door (172) and a second cowl door (172). The first cowl door (172) is disposed to a first side of the engine case (134) and is configured to pivot a first pivot angle (196) about a first pivot axis (174) between a first door closed position and a first door open position. The second cowl door (172) is disposed to a second side of the engine case (134) and is configured to pivot a second pivot angle (196) about a second pivot axis (174) between a second door closed position and a second door open position.

## Description

### BACKGROUND OF THE INVENTION

### 1. Technical Field

This invention relates generally to an aircraft and, more particularly, to a nacelle structure for an aircraft propulsion system.

### 2. Background Information

Various types and configurations of aircraft propulsion systems are known in the art including those with one or more open propulsor rotors. While these known aircraft propulsion systems have various benefits, there is still room in the art for improvement.

### SUMMARY OF THE INVENTION

According to an aspect of the present invention, a system is provided for an aircraft. This system includes an open propulsor rotor, a turbine engine and a housing structure. The turbine engine is configured to drive rotation of the open propulsor rotor. The turbine engine extends axially along a centerline axis of the turbine engine. The turbine engine includes a compressor section, a combustor section and a turbine section. The housing structure includes an engine case, a nacelle structure and a compartment. The engine case houses the compressor section, the combustor section and the turbine section. The nacelle structure includes a first cowl door and a second cowl door. The first cowl door is disposed to a first side of the engine case and is configured to pivot a first pivot angle about a first pivot axis between a first door closed position and a first door open position. The second cowl door is disposed to a second side of the engine case and is configured to pivot a second pivot angle about a second pivot axis between a second door closed position and a second door open position. The second pivot angle is greater than the first pivot angle. The nacelle structure houses and provides an aerodynamic cover over the engine case when the first cowl door is in the first door closed position and the second cowl door is in the second door closed position. The compartment is formed by and extends radially between the engine case and the first cowl door and/or the second cowl door.

According to another aspect of the present invention, another system is provided for an aircraft. This system includes an open propulsor rotor, a turbine engine and a housing structure. The turbine engine is configured to drive rotation of the open propulsor rotor. The turbine engine extends axially along a centerline axis of the turbine engine. The turbine engine includes a compressor section, a combustor section and a turbine section. The housing structure includes an engine case, a nacelle structure and a compartment. The engine case houses the compressor section, the combustor section and the turbine section. The nacelle structure includes a first cowl door and a second cowl door. The first cowl door is disposed to a first side of the engine case and is configured to pivot about a first pivot axis between a first door closed position and a first door open position. The first cowl door has a first circumferential length that extends circumferentially about the centerline axis between opposing circumferential ends of the first cowl door when the first cowl door is in the first door closed position. The second cowl door is disposed to a second side of the engine case and is configured to pivot about a second pivot axis between a second door closed position and a second door open position. The second cowl door has a second circumferential length that extends circumferentially about the centerline axis between opposing circumferential ends of the second cowl door when the second cowl door is in the second door closed position. The second circumferential length is different than the first circumferential length. The nacelle structure houses and provides an aerodynamic cover over the engine case when the first cowl door is in the first door closed position and the second cowl door is in the second door closed position. The compartment is formed by and extends radially between the engine case and the first cowl door and/or the second cowl door.

According to another aspect of the present invention, another system is provided for an aircraft. This system includes an open propulsor rotor, a turbine engine and a housing structure. The turbine engine is configured to drive rotation of the open propulsor rotor. The turbine engine extends axially along a centerline axis of the turbine engine. The turbine engine includes a compressor section, a combustor section and a turbine section. The housing structure includes an engine case, a nacelle structure and a compartment. The engine case houses the compressor section, the combustor section and the turbine section. The nacelle structure includes a first cowl door and a second cowl door. The first cowl door is disposed to a first side of the engine case and is configured to pivot about a first pivot axis between a first door closed position and a first door open position. The second cowl door is disposed to a second side of the engine case and is configured to pivot about a second pivot axis between a second door closed position and a second door open position. The nacelle structure houses and provides an aerodynamic cover over the engine case when the first cowl door is in the first door closed position and the second cowl door is in the second door closed position. At least one of the first cowl door or the second cowl door is configured as a multi-panel folding door. The compartment is formed by and extends radially between the engine case and the first cowl door and/or the second cowl door.

According to still another aspect of the present invention, another system is provided for an aircraft. This system includes a propulsion system and a pylon structure. The propulsion system includes an open propulsor rotor, a turbine engine and a housing structure. The turbine engine is configured to drive rotation of the open propulsor rotor. The turbine engine extends axially along a centerline axis of the turbine engine. The turbine engine includes a compressor section, a combustor section and a turbine section. The housing structure includes an engine case, a nacelle structure and a compartment. The engine case houses the compressor section, the combustor section and the turbine section. The nacelle structure includes a first cowl door and a second cowl door. The first cowl door is disposed to a first side of the turbine engine and is configured to pivot about a first pivot axis between a first door closed position and a first door open position. The second cowl door is disposed to a second side of the turbine engine and is configured to pivot about a second pivot axis between a second door closed position and a second door open position. The nacelle structure houses and provides an aerodynamic cover over the engine case when the first cowl door is in the first door closed position and the second cowl door is in the second door closed position. The compartment is formed by and extends radially between the engine case and the first cowl door and/or the second cowl door. The pylon structure is mounted to the propulsion system. The pylon structure is arranged circumferentially between the first pivot axis and the second pivot axis such that the pylon structure is circumferentially closer to the first pivot axis than the second pivot axis.
The following optional features may be applied to any of the above aspects in any combination.

The first pivot axis may be parallel with the centerline axis and/or the second pivot axis.

The first pivot axis may be located vertically above the second pivot axis.

The second pivot axis may be located vertically above the first pivot axis.

The second pivot angle may be at least fifteen degrees greater than the first pivot angle.

The second pivot angle may be at least thirty degrees greater than the first pivot angle.

The second pivot angle may be at least forty-five degrees greater than the first pivot angle.

The first cowl door may have a first circumferential length that extends circumferentially about the centerline axis between opposing circumferential ends of the first cowl door when the first cowl door is in the first door closed position. The second cowl door may have a second circumferential length that extends circumferentially about the centerline axis between opposing circumferential ends of the second cowl door when the second cowl door is in the second door closed position. The second circumferential length may be equal to the first circumferential length.

The first cowl door may have a first circumferential length that extends circumferentially about the centerline axis between opposing circumferential ends of the first cowl door when the first cowl door is in the first door closed position. The second cowl door may have a second circumferential length that extends circumferentially about the centerline axis between opposing circumferential ends of the second cowl door when the second cowl door is in the second door closed position. The second circumferential length may be different than the first circumferential length.

The second circumferential length may be less than the first circumferential length.

A difference between the second circumferential length and the first circumferential length may be equal to or greater than 0.1 times the first circumferential length.

The first cowl door may be configured as or otherwise include a first panel that extends circumferentially about the centerline axis between opposing circumferential ends of the first cowl door when the first cowl door is in the first door closed position. In addition or alternatively, the second cowl door may be configured as or otherwise include a second panel that extends circumferentially about the centerline axis between opposing circumferential ends of the second cowl door when the second cowl door is in the second door closed position.

The first cowl door may be configured as a first multi-panel folding door. In addition or alternatively, the second cowl door may be configured as a second multi-panel folding door.

The first cowl door may extend circumferentially about the centerline axis between opposing circumferential ends of the first cowl door when the first cowl door is in the first door closed position. The first cowl door may include a first door first panel and a first door second panel. The first door first panel may be pivotally coupled to the first door second panel at a first inter-panel pivot axis located circumferentially between the opposing circumferential ends of the first cowl door. In addition or alternatively, the second cowl door may extend circumferentially about the centerline axis between opposing circumferential ends of the second cowl door when the second cowl door is in the second door closed position. The second cowl door may include a second door first panel and a second door second panel. The second door first panel may be pivotally coupled to the second door second panel at a second inter-panel pivot axis located circumferentially between the opposing circumferential ends of the second cowl door.

The first cowl door may be configured as or otherwise include a first panel that extends circumferentially about the centerline axis between opposing circumferential ends of the first cowl door when the first cowl door is in the first door closed position. The second cowl door may extend circumferentially about the centerline axis between opposing circumferential ends of the second cowl door when the second cowl door is in the second door closed position. The second cowl door may include a second door first panel and a second door second panel. The second door first panel may be pivotally coupled to the second door second panel at an inter-panel pivot axis located circumferentially between the opposing circumferential ends of the second cowl door.

The system may also include a propulsion system and a pylon structure mounted to the propulsion system and circumferentially centered between the first pivot axis and the second pivot axis. The propulsion system may include the open propulsor rotor, the turbine engine and the housing structure.

The system may also include a propulsion system and a pylon structure mounted to the propulsion system. The propulsion system may include the open propulsor rotor, the turbine engine and the housing structure. The pylon structure may be arranged circumferentially between the first pivot axis and the second pivot axis such that the pylon structure is circumferentially closer to the first pivot axis than the second pivot axis.

The system may also include a propulsion system and a pylon structure mounted to the propulsion system and projecting longitudinally along a pylon centerline away from the propulsion system. The propulsion system may include the open propulsor rotor, the turbine engine and the housing structure. The pylon centerline may be circumferentially offset from a reference point about the centerline axis by an offset angle. The reference point may be disposed at a top-dead-center location of the housing structure. The offset angle may be a non-zero acute angle.

The first cowl door may be pivotally coupled to a stationary structure at the first pivot axis to a first side of the stationary structure. The second cowl door may be pivotally coupled to the stationary structure at the second pivot axis to a second side of the stationary structure.

The first cowl door may be pivotally coupled to a stationary structure at the first pivot axis to a first side of the stationary structure. The nacelle structure may also include an intermediate panel fixed to the stationary structure to a second side of the stationary structure. The second cowl door may be pivotally coupled to the intermediate panel at the second pivot axis.

The first cowl door may be pivotally coupled to a stationary structure at the first pivot axis to a first side of the stationary structure. The nacelle structure may also include an intermediate panel pivotally coupled to the stationary structure to a second side of the stationary structure. The second cowl door may be pivotally coupled to the intermediate panel at the second pivot axis.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a perspective illustration of an aircraft with multiple propulsion systems mounted to wings of the aircraft.
FIG. 2 is a schematic illustration of an exemplary one of the propulsion systems.
FIG. 3 is a schematic illustration of a portion of the propulsion system of FIG. 2 at a propulsion section.
FIG. 4 is a front end view illustration of the aircraft.
FIG. 5 is a front end view illustration of a portion of the aircraft at one of the propulsion systems configured with an angled pylon structure.
FIG. 6 is a front end view illustration of a portion of another aircraft at a propulsion system configured with a vertical pylon structure.
FIG. 7A is a front end view illustration of a portion of the aircraft at one of the propulsion systems configured with its cowl doors closed.
FIG. 7B is a front end view illustration of a portion of the aircraft at one of the propulsion systems configured with its cowl doors open.
FIGS. 8-10 are front end view illustrations of a portion of the aircraft at one of the propulsion systems configured various alternative cowl doors in open positions.
FIGS. 11A and 11B are front end view illustrations of a portion of the aircraft at one of the propulsion systems configured various intermediate panel between the open cowl doors.
FIG. 12 is a schematic plan view illustration of cowl door pivot axes and a propulsion system axis.
FIG. 13 is a front end view illustration of a portion of the aircraft at one of the propulsion systems mounted to a fuselage.

### DETAILED DESCRIPTION

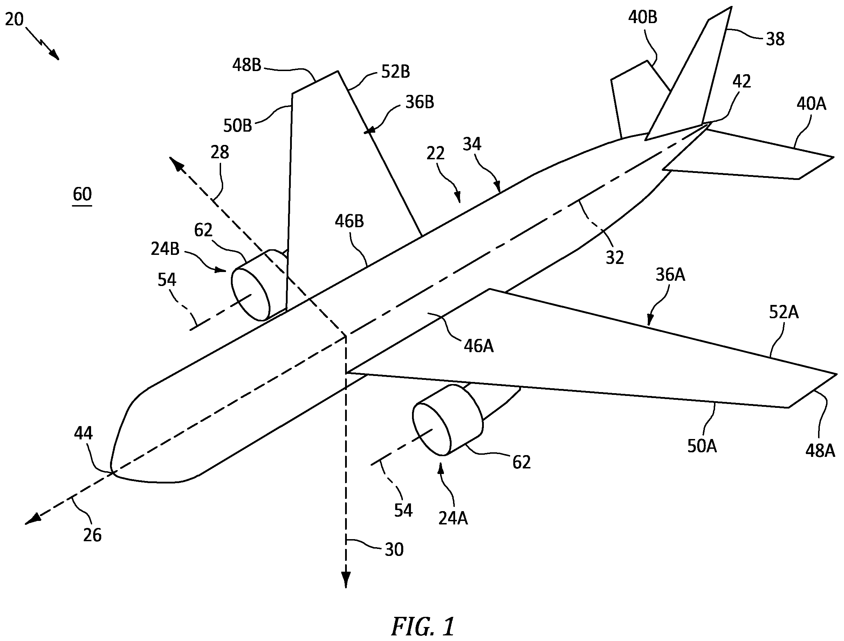

FIG. 1 is a perspective schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22 and one or more aircraft propulsion systems 24A and 24B (generally referred to as "24"); e.g., a pair of companion aircraft propulsion systems. The aircraft 20 and its aircraft airframe 22 have a roll axis 26, a pitch axis 28 and a yaw axis 30. The roll axis 26 and the pitch axis 28 of FIG. 1 lay in and define a horizontal aircraft plane. This horizontal aircraft plane may be completely or substantially (e.g., within 5-10°) parallel with a horizon line and/or completely or substantially (e.g., within 5-10°) perpendicular to a force of gravity when, for example, the aircraft 20 is flying in (or close to) level flight and/or the aircraft 20 is on ground. The roll axis 26 of FIG. 1 is a longitudinally extending axis that may be parallel (e.g., coaxial) with, or slightly angularly offset (e.g., by less than 5° or 10°) vertically up or down from, a longitudinal centerline 32 of the aircraft 20 and its aircraft airframe 22. The pitch axis 28 of FIG. 1 is a laterally extending axis that is perpendicular to the roll axis 26. The yaw axis 30 of FIG. 1 is a vertically extending axis that is perpendicular to the roll axis 26 and the pitch axis 28 and, thus, perpendicular to the horizontal plane.

The aircraft airframe 22 of FIG. 1 includes an aircraft fuselage 34 and one or more aircraft wings 36A and 36B (generally referred to as "36"). This aircraft airframe 22 may also include one or more aircraft stabilizers, such as at least one vertical stabilizer 38 and one or more horizontal stabilizers 40A and 40B arranged at (e.g., on, adjacent or proximate) an aft, downstream tail end 42 of the aircraft fuselage 34. However, in other embodiments, it is contemplated one or more of the aircraft stabilizers 38, 40A and/or 40B may be omitted.

The aircraft fuselage 34 extends longitudinally along the aircraft centerline 32 from a forward, upstream nose end 44 of the aircraft airframe 22 and its aircraft fuselage 34 to the fuselage tail end 42. The aircraft fuselage 34 extends laterally between and to opposing lateral sides 46A and 46B (generally referred to as "46") of the aircraft fuselage 34.

The aircraft wings 36A and 36B are arranged to the opposing lateral sides 46A and 46B of the aircraft fuselage 34. The first aircraft wing 36A of FIG. 1, for example, is connected to the aircraft fuselage 34 at the fuselage first side 46A. The second aircraft wing 36B is connected to the aircraft fuselage 34 at the fuselage second side 46B. The aircraft fuselage 34 of FIG. 1 is thereby located laterally between the first aircraft wing 36A and the second aircraft wing 36B. Each of these aircraft wings 36A and 36B projects spanwise out from the aircraft fuselage 34 to a tip 48A, 48B of the respective aircraft wing 36A, 36B. Each of the aircraft wings 36A and 36B extends longitudinally between and to a leading edge 50A, 50B of the respective aircraft wing 36A, 36B and a trailing edge 52A, 52B of the respective aircraft wing 36A, 36B.

The aircraft propulsion systems 24A and 24B of FIG. 1 are mounted to the aircraft airframe 22 and arranged to the opposing lateral sides 46A and 46B of the aircraft fuselage 34. The first aircraft propulsion system 24A of FIG. 1, for example, is mounted to the first aircraft wing 36A. The second aircraft propulsion system 24B is mounted to the second aircraft wing 36B. The aircraft fuselage 34 of FIG. 1 is thereby located laterally between the first aircraft propulsion system 24A and the second aircraft propulsion system 24B.

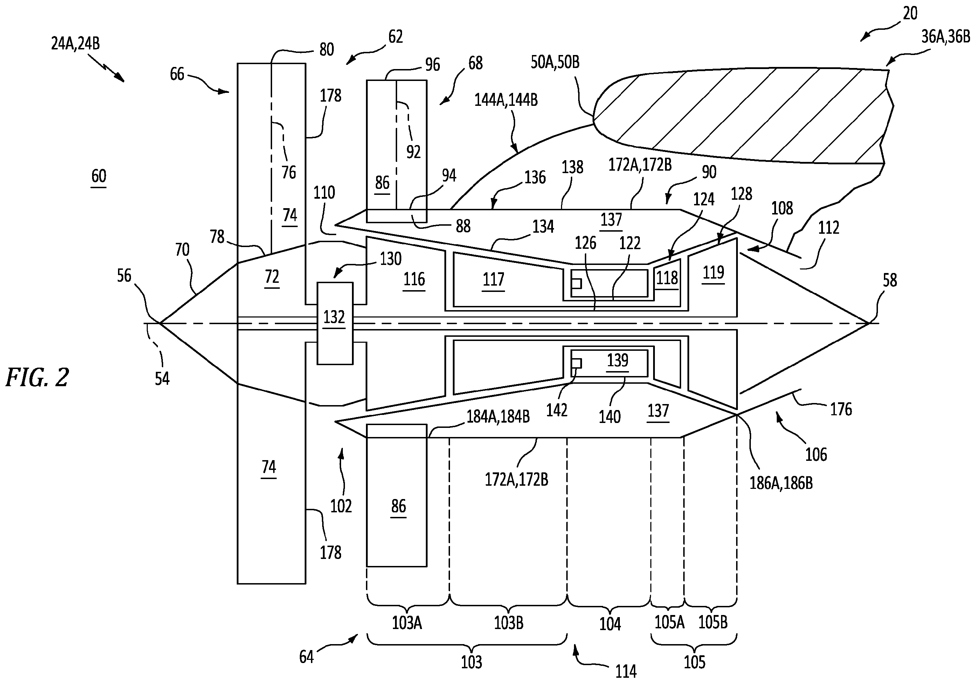

Referring to FIG. 2, each aircraft propulsion system 24 extends axially along an axis 54 of the respective aircraft propulsion system 24 between an upstream, forward end 56 of the aircraft propulsion system 24 and a downstream, aft end 58 of the aircraft propulsion system 24. The propulsion system axis 54 may be a centerline axis of the respective aircraft propulsion system 24 and/or a centerline axis of one or more members of the respective aircraft propulsion system 24. The propulsion system axis 54 may also or alternatively be a rotational axis of one or more members of the respective aircraft propulsion system 24.

Each aircraft propulsion system 24 may be configured as an open rotor propulsion system with a single open rotor and swirl recovery vane (SRV) architecture. Herein, the term "open" may describe a propulsion system section and/or a propulsion system component which is open to an environment 60 (e.g., an ambient environment) external to the aircraft propulsion system 24 and, more generally, the aircraft 20. The aircraft propulsion system 24 of FIG. 2, for example, includes an open rotor propulsion section 62 and a gas turbine engine 64. Here, the propulsion system axis 54 may be an axial centerline and/or a rotational axis for the propulsion section 62 and/or the turbine engine 64. The present invention, however, is not limited to such an exemplary arrangement as described below in further detail.

The propulsion section 62 of FIG. 2 includes an open propulsor rotor 66 and an open guide vane structure 68. These propulsion section members 66 and 68 are un-ducted components of the aircraft propulsion system 24 and its propulsion section 62. The propulsion section 62 of FIG. 2 also includes a nose cone 70 disposed at (e.g., on, adjacent or proximate) the propulsion system forward end 56. Briefly, this nose cone 70 may be configured as a spinner which is rotatable with the propulsor rotor 66 about the propulsion system axis 54. Alternatively, the nose cone 70 may be configured as a stationary structure of the propulsion section 62.

The propulsor rotor 66 includes a rotor base 72 (e.g., a disk or a hub) and a plurality of open propulsor blades 74 (e.g., airfoils). The propulsor blades 74 are arranged and may be equispaced circumferentially about the rotor base 72 and the propulsion system axis 54 in an array; e.g., a circular array. This propulsor blade array may be unshrouded or alternatively shrouded by a tubular propulsor rotor shroud dedicated to the propulsor rotor 66 for example. The propulsor blade array and, more generally, the propulsor rotor 66 may include a total number of nine (9) or more (e.g., twelve (12) or more) of the propulsor blades 74. Each of the propulsor blades 74 is connected to (e.g., formed integral with or otherwise attached to) the rotor base 72. Each of the propulsor blades 74 projects spanwise along a span line 76 of the respective propulsor blade 74 (e.g., radially relative to the propulsion system axis 54) out from an exterior surface 78 of the rotor base 72, into the external environment 60, to a distal tip 80 of the respective propulsor blade 74. Each propulsor blade 74 is thereby configured as an un-ducted propulsor blade which is exposed to (e.g., disposed in) the surrounding external environment 60.

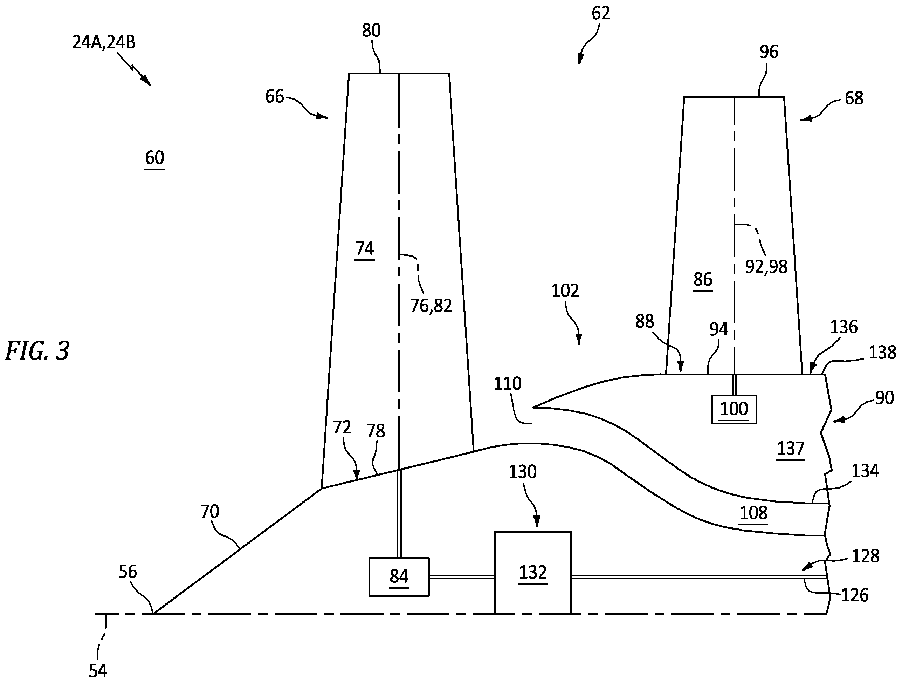

Referring to FIG. 3, each propulsor blade 74 may be configured to pivot about a respective blade pivot axis 82. This blade pivot axis 82 may generally extend radially relative to the propulsion system axis 54. Each propulsor blade 74 of FIG. 3 is operatively coupled with a blade actuation system 84. This blade actuation system 84 is configured to pivot each propulsor blade 74 about its respective blade pivot axis 82. By pivoting each propulsor blade 74 about its blade pivot axis 82, a pitch of the respective propulsor blade 74 may be changed. Of course, it is contemplated some or all of the propulsor blades 74 may be alternatively moved to change the propulsor blade pitch. Moreover, it is contemplated some or all of the propulsor blades 74 may alternatively be fixed pitch propulsor blades in other embodiments.

The guide vane structure 68 of FIG. 2 includes a plurality of open exit guide vanes 86 (e.g., airfoils) that are arranged and may be equispaced circumferentially about the propulsion system axis 54 in an array; e.g., a circular array. This guide vane array may be unshrouded or alternatively shrouded by a tubular guide vane shroud dedicated to the guide vane structure 68 for example. The guide vane structure 68 and its guide vanes 86 are arranged axially next to (e.g., adjacent) the propulsor rotor 66 and its propulsor blades 74. The guide vane structure 68 and its guide vanes 86 of FIG. 2, for example, are arranged downstream of the propulsor rotor 66 and its propulsor blades 74, without (e.g., any) other elements axially therebetween to obstruct, turn and/or otherwise influence the air propelled by the propulsor rotor 66 to the guide vane structure 68 for example. Each of the guide vanes 86 of FIG. 2 is coupled to a support structure 88 of a stationary housing structure 90 for the aircraft propulsion system 24. This support structure 88 may be configured as or otherwise include a support frame, a case and/or another fixed structure of the housing structure 90. Each of the guide vanes 86 projects spanwise along a span line 92 of the respective guide vane 86 (e.g., radially relative to the propulsion system axis 54) out from an exterior surface 94 of the housing structure 90, into the external environment 60, to a distal tip 96 of the respective guide vane 86. Here, the exterior surface 94 radially borders the external environment 60 and forms an exterior aerodynamic flow surface of the aircraft propulsion system 24. Each guide vane 86 is thereby configured as an un-ducted guide vane which is exposed to (e.g., disposed in) the surrounding external environment 60.

Referring to FIG. 3, each guide vane 86 may be configured to pivot about a respective vane pivot axis 98. This vane pivot axis 98 may generally extend radially relative to the propulsion system axis 54. Each guide vane 86 of FIG. 3 is operatively coupled with a vane actuation system 100. This vane actuation system 100 may be discrete from or integrated as a functional part of the blade actuation system 84. The vane actuation system 100 is configured to pivot each guide vane 86 about its respective vane pivot axis 98. By pivoting each guide vane 86 about its vane pivot axis 98, a pitch of the respective guide vane 86 may be changed. Of course, it is contemplated some or all of the guide vanes 86 may be alternatively moved to change the guide vane pitch. Moreover, it is contemplated some or all of the guide vanes 86 may alternatively be fixed pitch guide vanes in other embodiments.

Referring to FIG. 2, the turbine engine 64 includes an inlet section 102, a compressor section 103, a combustor section 104, a turbine section 105 and an exhaust section 106. The compressor section 103 of FIG. 2 includes a low pressure compressor (LPC) section 103A and a high pressure compressor (HPC) section 103B. The turbine section 105 of FIG. 2 includes a high pressure turbine (HPT) section 105A and a low pressure turbine (LPT) section 105B. The turbine engine 64 also includes an (e.g., annular) engine flowpath 108 which extends longitudinally through the aircraft propulsion system 24 of FIG. 2 and its turbine engine 64 from an airflow inlet 110 into the engine flowpath 108 to a combustion products exhaust 112 from the engine flowpath 108. The flowpath inlet 110 is also an airflow inlet into the aircraft propulsion system 24 of FIG. 2 and its turbine engine 64. The flowpath exhaust 112 is also a combustion products exhaust from the aircraft propulsion system 24 of FIG. 2 and its turbine engine 64. At least (or only) the LPC section 103A, the HPC section 103B, the combustor section 104, the HPT section 105A and the LPT section 105B collectively form a core 114 (e.g., a gas generator) of the turbine engine 64.

The LPC section 103A includes a bladed low pressure compressor (LPC) rotor 116. The HPC section 103B includes a bladed high pressure compressor (HPC) rotor 117. The HPT section 105A includes a bladed high pressure turbine (HPT) rotor 118. The LPT section 105B includes a bladed low pressure turbine (LPT) rotor 119. Each of these bladed rotor 116-119 may be a ducted and/or shrouded engine rotor. Each of the engine rotors 116-119 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 108. Each of the rotor blades is connected to the respective rotor base. Each of the rotor blades projects radially (e.g., spanwise) out from the respective rotor base into the engine flowpath 108 and to a distal tip of the respective rotor blade.

The HPC rotor 117 is coupled to and rotatable with the HPT rotor 118. The HPC rotor 117 of FIG. 2, for example, is connected to the HPT rotor 118 by a high speed shaft 122. At least (or only) the HPC rotor 117, the HPT rotor 118 and the high speed shaft 122 collectively form a high speed rotating structure 124; e.g., a high speed spool of the turbine engine 64 and its engine core 114. This high speed rotating structure 124 of FIG. 2 and its members 117, 118 and 122 are rotatable about the propulsion system axis 54. However, in other embodiments, the high speed rotating structure 124 and its members 117, 118 and 122 may alternatively be rotatable about another rotational axis (e.g., the engine centerline) which is (e.g., radially and/or angularly) offset from the rotational axis of the propulsor rotor 66.

The LPC rotor 116 is coupled to and rotatable with the LPT rotor 119. The LPC rotor 116 of FIG. 2, for example, is connected to the LPT rotor 119 by a low speed shaft 126. At least (or only) the LPC rotor 116, the LPT rotor 119 and the low speed shaft 126 collectively form a low speed rotating structure 128; e.g., a low speed spool of the turbine engine 64 and its engine core 114. This low speed rotating structure 128 of FIG. 2 and its members 116, 119 and 126 are rotatable about the propulsion system axis 54. However, in other embodiments, the low speed rotating structure 128 and its members 116, 119 and 126 may alternatively be rotatable about another rotational axis (e.g., the engine centerline) which is (e.g., radially and/or angularly) offset from the rotational axis of the propulsor rotor 66.

The low speed rotating structure 128 is coupled to the propulsor rotor 66 through a drivetrain 130. This drivetrain 130 may be configured as a geared drivetrain, where a geartrain 132 (e.g., a transmission, a speed change device, an epicyclic geartrain, etc.) is disposed between and operatively couples the propulsor rotor 66 to the low speed rotating structure 128 and its LPT rotor 119. With this arrangement, the propulsor rotor 66 may rotate at a different (e.g., slower) rotational speed than the low speed rotating structure 128 and its LPT rotor 119. Here, the propulsor rotor 66 and the low speed rotating structure 128 may rotate in a common (the same) direction about the propulsion system axis 54 or in opposite directions about the propulsion system axis 54 depending, for example, upon the specific configuration of the geartrain 132. Alternatively, the drivetrain 130 may be configured as a direct-drive drivetrain, where the geartrain 132 is omitted. With such an arrangement, the propulsor rotor 66 rotates at a common (the same) rotational speed as the low speed rotating structure 128 and its LPT rotor 119.

The engine sections 102-106 of FIG. 2 are arranged sequentially along the propulsion system axis 54 and are housed within and/or formed by the housing structure 90. This housing structure 90 includes an engine case 134 (e.g., a gas generator case), a nacelle structure 136 and an internal compartment 137 (e.g., a core compartment). The engine case 134 houses one or more of the engine sections 103A-105B; e.g., the engine core 114. The engine case 134 of FIG. 2, for example, extends axially along (e.g., axially overlaps) and extends circumferentially about (e.g., circumscribes) the engine sections 103A-105B and the bladed rotors 116-119. The engine case 134 may also house the geartrain 132. The nacelle structure 136 houses and provides an aerodynamic cover over the engine case 134. At least an outer barrel portion 138 of the nacelle structure 136 of FIG. 2, for example, is disposed radially outboard of, extends axially along (e.g., axially overlaps) and extends circumferentially about (e.g., circumscribes) the engine core 114 and its engine case 134. The nacelle structure 136 and its outer barrel portion 138 may at least partially or completely form the exterior surface 94. The compartment 137 of FIG. 2 is formed by and is disposed radially between the engine case 134 and the nacelle structure 136 and its outer barrel portion 138. With the housing structure arrangement of FIG. 2, the bladed rotors 116-119 are disposed within the housing structure 90 and its engine case 134. By contrast, the propulsor rotor 66 and the guide vane structure 68 are disposed at least partially (or completely) outside of the housing structure 90.

During operation of the aircraft propulsion system 24 of FIG. 2, ambient air within the external environment 60 is propelled by the rotating propulsor rotor 66 in the downstream, aft direction towards the propulsion system aft end 58. A major portion (e.g., more than 50%) of this air bypasses the turbine engine 64 to provide forward thrust while a minor portion (e.g., less than 50%) of the air flows into the turbine engine 64. For example, an outer stream of the air propelled by the rotating propulsor rotor 66 flows axially across the guide vane structure 68 and outside of the housing structure 90 and its exterior surface 94; e.g., along an exterior of the nacelle 136. The guide vane structure 68 conditions (e.g., straightens out, de-swirls, etc.) the outer stream of air within the external environment 60 to enhance the forward thrust. By contrast, an inner stream of the air propelled by the rotating propulsor rotor 66 may bypass the guide vane structure 68 and enter the turbine engine 64 and its engine flowpath 108 through the flowpath inlet 110. The air entering the engine flowpath 108 through the flowpath inlet 110 may be referred to as "core air".

The core air is compressed by the LPC rotor 116 and the HPC rotor 117 and directed into a combustion chamber 139 (e.g., an annular combustion chamber) of a combustor 140 (e.g., an annular combustor) in the combustor section 104. Fuel is injected into the combustion chamber 139 by one or more fuel injectors 142 and mixed with the compressed core air to provide a fuel-air mixture. This fuel-air mixture is ignited and combustion products thereof flow through and sequentially drive rotation of the HPT rotor 118 and the LPT rotor 119. The rotation of the HPT rotor 118 and the LPT rotor 119 respectively drive rotation of the HPC rotor 117 and the LPC rotor 116 and, thus, compression of the core air. The rotation of the LPT rotor 119 also drives the rotation of the propulsor rotor 66 through the drivetrain 130. The turbine engine 64 and its low speed rotating structure 128 thereby power operation of (e.g., drive rotation of) the propulsor rotor 66 through the drivetrain 130 during aircraft propulsion system operation.

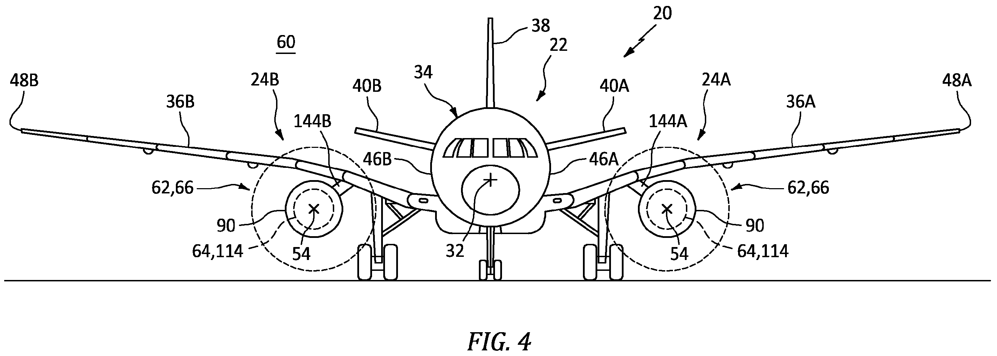

Referring to FIG. 4, each aircraft propulsion system 24 may be mounted to the aircraft airframe 22 under wing. Each aircraft propulsion system 24A, 24B of FIG. 4, for example, is mounted to a respective one of the aircraft wings 36A, 36B by a respective pylon structure 144A, 144B (generally referred to as "144") with the propulsion system members 64, 90, 114 (see FIG. 2) located at least partially or completely vertically below the respective aircraft wings 36A, 36B. For ease of description, features of each pylon structure 144 may be described below with reference to the first pylon structure 144A. The second pylon structure 144B, however, may also include one, some or all of those same first pylon structure features. The second pylon structure 144B of FIG. 4, for example, has a mirror image configuration to the first pylon structure 144A.

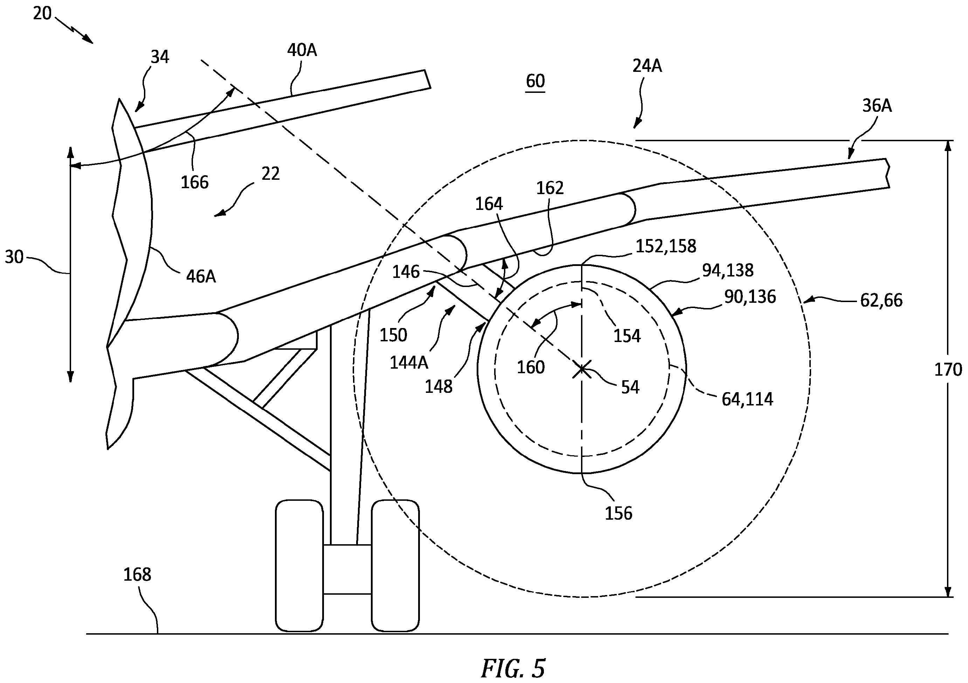

Referring to FIG. 5, the first pylon structure 144A extends longitudinally along a longitudinal centerline 146 of the first pylon structure 144A through the external environment 60 from the first aircraft propulsion system 24A to the first aircraft wing 36A. The first pylon structure 144A meets the first aircraft propulsion system 24A and its housing structure 90 at a pylon-propulsion system interface 148. The first pylon structure 144A meets the aircraft airframe 22 and its first aircraft wing 36A at a pylon-wing interface 150.

At the pylon-propulsion system interface 148, the first pylon structure 144A projects longitudinally along the pylon centerline 146 out from the housing structure 90 and its exterior surface 94 in a first direction. This first direction of FIG. 5 extends (a) vertically upward relative to the vertically extending yaw axis 30 (e.g., in a direction opposite gravity) and (b) laterally inboard towards the aircraft fuselage 34 relative to the laterally extending pitch axis 28 (see FIG. 1). The first direction of FIG. 5 also extends radially outward relative to the respective propulsion system axis 54.

The pylon-propulsion system interface 148 may be disposed circumferentially to a side (e.g., an inboard side relative to the aircraft fuselage 34) of a top-dead-center location 152 of the first aircraft propulsion system 24A and its housing structure 90. Briefly, at this top-dead-center location 152, a ray 154 projecting radially outward from the respective propulsion system axis 54 is parallel with the vertically extending yaw axis 30; e.g., the ray 154 is completely vertical. Moreover, the top-dead-center location 152 is disposed vertically above a bottom-dead-center location 156 of the first aircraft propulsion system 24A and its housing structure 90 when, for example, the aircraft 20 is flying in (or close to) level flight and/or the aircraft 20 is on ground. With the pylon-propulsion system interface 148 disposed circumferentially to the side of the top-dead-center location 152, the pylon centerline 146 of FIG. 5 is circumferentially offset from a reference point 158 at, or otherwise vertically aligned with, the top-dead-center location 152 by a pylon-propulsion system offset angle 160. This pylon-propulsion system offset angle 160 is a non-zero acute angle. The pylon-propulsion system offset angle 160, for example, may be equal to or greater than five degrees (5°) or ten degrees (10°). The pylon-propulsion system offset angle 160 may be equal to or less than eighty degrees (80°) or seventy degrees (70°). In particular, the pylon-propulsion system offset angle 160 may be between twenty degrees (20°) and sixty degrees (60°) inclusive and, more particularly, between thirty degrees (30°) and fifty degrees (50°) inclusive.

The first pylon structure 144A and its pylon centerline 146 may be arranged perpendicular to the housing structure 90 and its exterior surface 94 at (or about) the pylon-propulsion system interface 148. Alternatively, the first pylon structure 144A and its pylon centerline 146 may be angularly offset from the housing structure 90 and its exterior surface 94 at (or about) the pylon-propulsion system interface 148 by an acute angle greater than, for example, seventy degrees (70°) or eighty degrees (80°). Such embodiments may be particularly useful where, for example, the exterior surface 94 has a non-circular cross-sectional geometry in a reference plane perpendicular to the respective propulsion system axis 54; e.g., the plane of FIG. 5.

At the pylon-wing interface 150, the first pylon structure 144A projects longitudinally along the pylon centerline 146 out from the first aircraft wing 36A and an exterior surface 162 (e.g., a bottom exterior surface) of the first aircraft wing 36A in a second direction. This second direction may be opposite the first direction. The second direction of FIG. 5, for example, extends (a) vertically downward relative to the vertically extending yaw axis 30 (e.g., in a direction with gravity) and (b) laterally outboard away from the aircraft fuselage 34 relative to the laterally extending pitch axis 28 (see FIG. 1). The second direction of FIG. 5 also extends radially inward relative to the respective propulsion system axis 54.

The first pylon structure 144A and its pylon centerline 146 of FIG. 5 are angularly offset from the first aircraft wing 36A and its exterior surface 162 by a pylon-wing offset angle 164 in the reference plane; e.g., the plane of FIG. 5. This pylon-wing offset angle 164 is a non-zero acute angle. The pylon-wing offset angle 164, for example, may be equal to or greater than five degrees (5°) or ten degrees (10°). The pylon-wing offset angle 164 may be equal to or less than eighty degrees (80°) or seventy degrees (70°). In particular, the pylon-wing offset angle 164 may be between twenty degrees (20°) and sixty degrees (60°) inclusive and, more particularly, between thirty degrees (30°) and fifty degrees (50°) inclusive. Alternatively, the first pylon structure 144A and its pylon centerline 146 may be arranged perpendicular to the first aircraft wing 36A and its exterior surface 162. Such embodiments may be particularly useful where, for example, the first aircraft wing 36A has a gull wing configuration and the pylon-wing offset angle 164 is disposed along a relatively steep bend along a span of the first aircraft wing 36A.

The first pylon structure 144A and its pylon centerline 146 of FIG. 5 are also angularly offset from the vertically extending yaw axis 30 by a pylon-vertical offset angle 166 in the reference plane; e.g., the plane of FIG. 5. This pylon-vertical offset angle 166 is a non-zero acute angle. The pylon-vertical offset angle 166, for example, may be equal to or greater than five degrees (5°) or ten degrees (10°). The pylon-vertical offset angle 166 may be equal to or less than eighty degrees (80°) or seventy degrees (70°). In particular, the pylon-vertical offset angle 166 may be between twenty degrees (20°) and sixty degrees (60°) inclusive and, more particularly, between thirty degrees (30°) and fifty degrees (50°) inclusive.

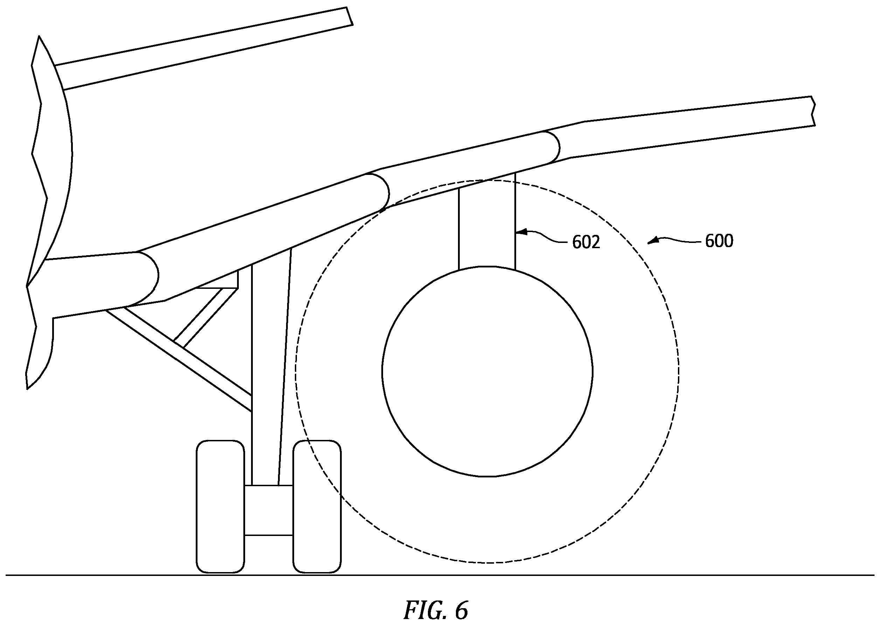

With the foregoing arrangement, when the aircraft 20 is on ground, the first aircraft propulsion system 24A is shifted vertically upward closer to the first aircraft wing 36A and away from a ground surface 168. This vertical shift is particularly noticeable when compared to an aircraft propulsion system 600 with a vertical pylon structure 602 as shown in FIG. 6. Referring again to FIG. 5, by shifting the first aircraft propulsion system 24A vertically upward, additional ground clearance for the propulsor rotor 66 is provided. This additional ground clearance may be utilized to position the propulsor rotor 66 farther away from the ground surface 168 to reduce likelihood of foreign object damage (FOD) to the propulsor rotor 66 when the aircraft 20 is taxiing, taking off and/or landing. The additional ground clearance may also or alternatively be utilized to accommodate a larger outer diameter 170 for the propulsor rotor 66. Briefly, this outer diameter 170 may be measured as two times (2x) a radius extending from the respective propulsion system axis 54 to a respective one of the blade tips 80 (see FIG. 2). Moreover, by positioning the pylon-wing interface 150 laterally inboard between the aircraft fuselage 34 and the pylon-propulsion system interface 148, the first pylon structure 144A may be attached to the first aircraft wing 36A laterally closer to the aircraft fuselage 34 to decrease a corresponding moment arm. In turn, structural reinforcement within the first aircraft wing 36A may be reduced in span to reduce aircraft wing weight and/or overall size.

During installation, removal, inspection and/or maintenance of the aircraft propulsion system 24 of FIG. 2, a technician may access the compartment 137 within the housing structure 90 to install, remove, inspect, repair and/or replace one or more propulsion system members (not shown for clarity of illustration); e.g., components and/or systems. One or more of these propulsion system members may be located within the compartment 137. One or more of the propulsion system members may also or alternatively border the compartment 137. One or more of the propulsion system members may also or alternatively be located outside of the compartment 137, but accessible through the compartment 137. Examples of the propulsion system members include, but are not limited to, component and/or systems within one or more of the engine sections 103A-105B, engine peripherals and/or accessories within the compartment 137, the vane actuation system 100 (see FIG. 3), and/or the like. Examples of the engine peripherals and/or accessories include, but are not limited to, an electric motor, an electric generator, an electric motor-generator, a pump, an actuator, electronics (e.g., an onboard engine controller, a power bus, a power storage, etc.), and/or the like.

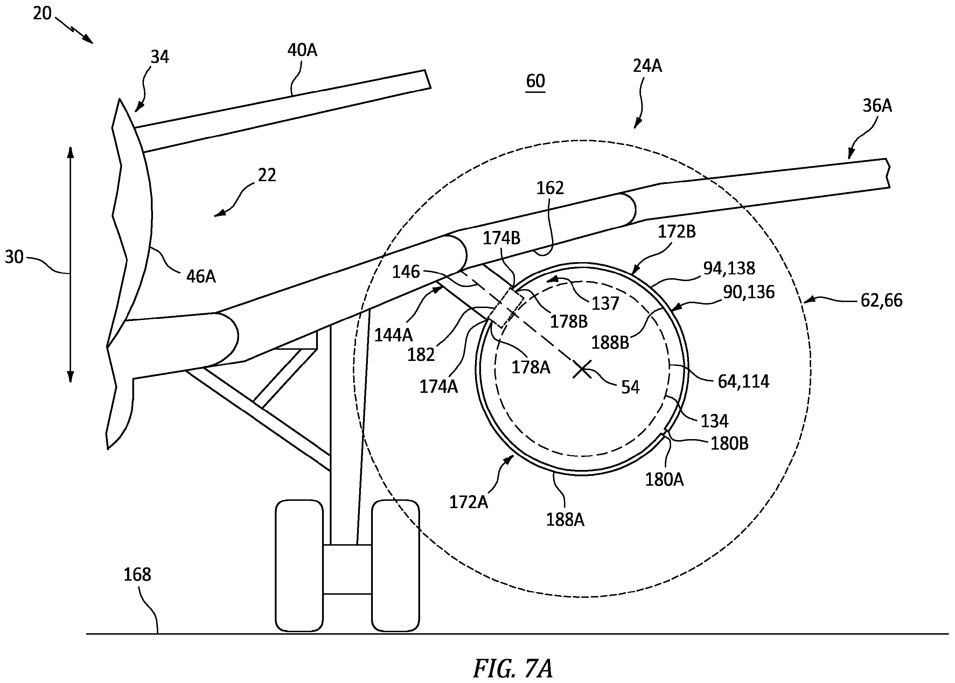

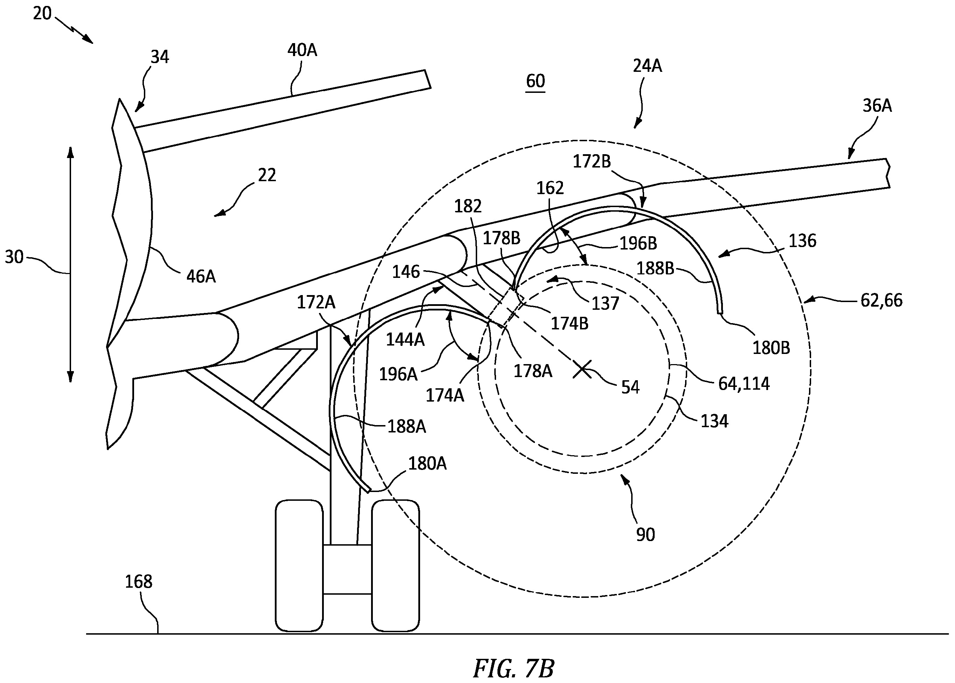

Referring to FIGS. 7A and 7B, to facilitate access to the compartment 137 and, thus, one or more of the propulsion system members, the nacelle structure 136 includes one or more cowl doors 172A and 172B (generally referred to as "172"). Each of these cowl doors 172A, 172B is configured to (e.g., independently) pivot about a respective door pivot axis 174A, 174B (generally referred to as "174") between a fully closed position (e.g., see FIG. 7A) and a fully open position (e.g., see FIG. 7B). With the cowl doors 172 in their closed positions of FIG. 7A, the cowl doors 172 may be configured to partially or completely form the outer barrel portion 138 of the nacelle structure 136. Referring to FIG. 2, the cowl doors 172 (one visible in FIG. 2) may thereby collectively (partially or completely) form a section of the exterior surface 94 extending axially along the respective propulsion system axis 54 between the vane structure 68 and an exhaust nozzle 176. Briefly, the exhaust nozzle 176 of FIG. 2 is disposed in the exhaust section 106 and forms a radial outer peripheral boundary of the flowpath exhaust 112. Also in the closed positions of FIG. 7A, the cowl doors 172 may form a radial outer peripheral boundary of the compartment 137. By contrast, with the cowl doors 172 in their open positions of FIG. 7B, the cowl doors 172 may open access to the compartment 137 from the external environment 60. Note, while FIG. 7B illustrates both of the cowl doors 172 in their open positions, it is contemplated the proximal cowl door 172A (e.g., the cowl door proximal to the aircraft fuselage 34) may be partially or completely open while the distal cowl door 172B (e.g., the cowl door distal from the aircraft fuselage 34) is closed. It is also (or alternatively) contemplated the distal cowl door 172B may be partially or completely open while the proximal cowl door 172A is closed.

When in its closed position of FIG. 7A, each cowl door 172A, 172B extends circumferentially about the respective propulsion system axis 54 between opposing circumferentially ends 178A, 178B (generally referred to as "178") and 180A, 180B (generally referred to as "180") of the respective cowl door 172A, 172B. At the upper door end 178 proximal the respective pylon structure 144, each cowl door 172 of FIG. 7A is pivotally coupled to a stationary structure 182. Briefly, this stationary structure 182 may be configured as part of the housing structure 90 or the respective pylon structure 144. Alternatively, the stationary structure 182 may be connected to the housing structure 90 and/or the respective pylon structure 144. With the above door-to-structure coupling, each cowl door 172 may pivot about its door pivot axis 174 between the closed position (see FIG. 7A) and the open position (see FIG. 7B). At the lower door end 180 distal from the respective pylon structure 144, each cowl door 172A, 172B of FIG. 7A may be latched to a lower latch beam and/or the other cowl door 172B, 172A at its lower door end 180 to secure that cowl door 172A, 172B (or both cowl doors 172) in the closed position(s) of FIG. 7A. To then open one or more of the cowl doors 172 towards or to the open position(s) (see FIG. 7B), the respective cowl door(s) 172 is/are unlatched. With the foregoing arrangement, each cowl door 172 of FIG. 7A is disposed radially outboard of and extends circumferentially about (e.g., circumferentially overlaps) the engine core 114 and the engine case 134. The upper door end 178 of FIG. 7A is located vertically above the lower door end 180 along the yaw axis 30 when, for example, the aircraft 20 is flying in (or close to) level flight and/or the aircraft 20 is on the ground (see FIG. 1).

Referring to FIG. 2, each cowl door 172A, 172B extends axially along respective propulsion system axis 54 between opposing axial ends 184A, 184B (generally referred to as "184") and 186A, 186B (generally referred to as "186") of the respective cowl door 172A, 172B. Each cowl door 172 of FIG. 2 extends axially along (e.g., axially overlaps) the engine core 114 and one or more of its engine sections 103A-105B as well as the engine case 134.

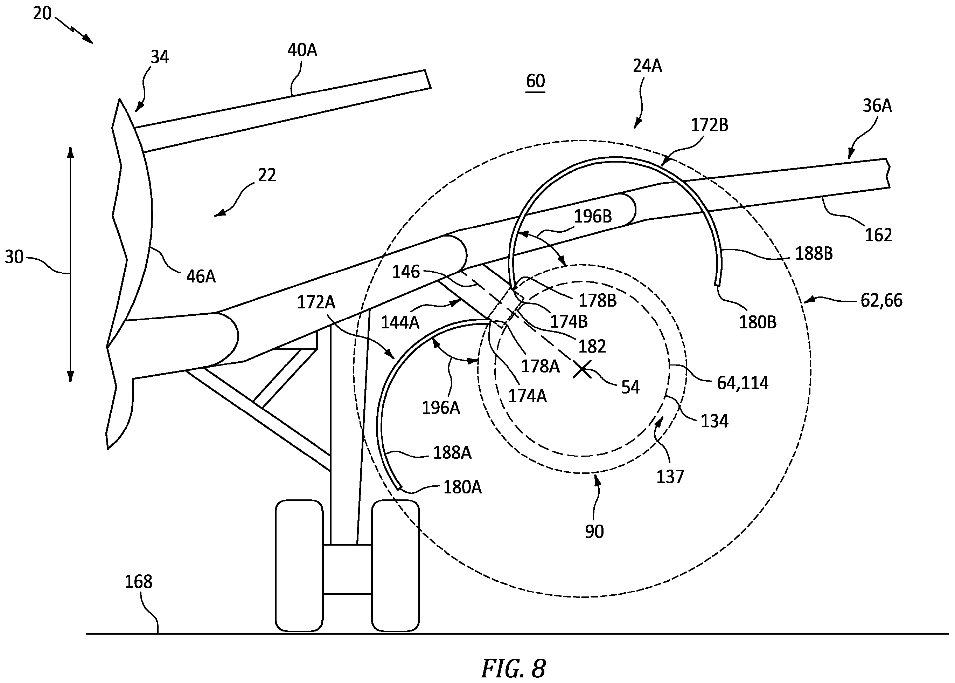

In some embodiments, referring to FIGS. 7B and 8, each cowl door 172A, 172B may be configured with a single door panel 188A, 188B (generally referred to as "188"). In such embodiments, each door panel 188 extends circumferentially between and to the upper door end 178 and the lower door end 180 of the respective cowl door 172. Each door panel 188 also extends axially between and to the opposing axial ends 184 and 186 of the respective cowl door 172 (see FIG. 2).

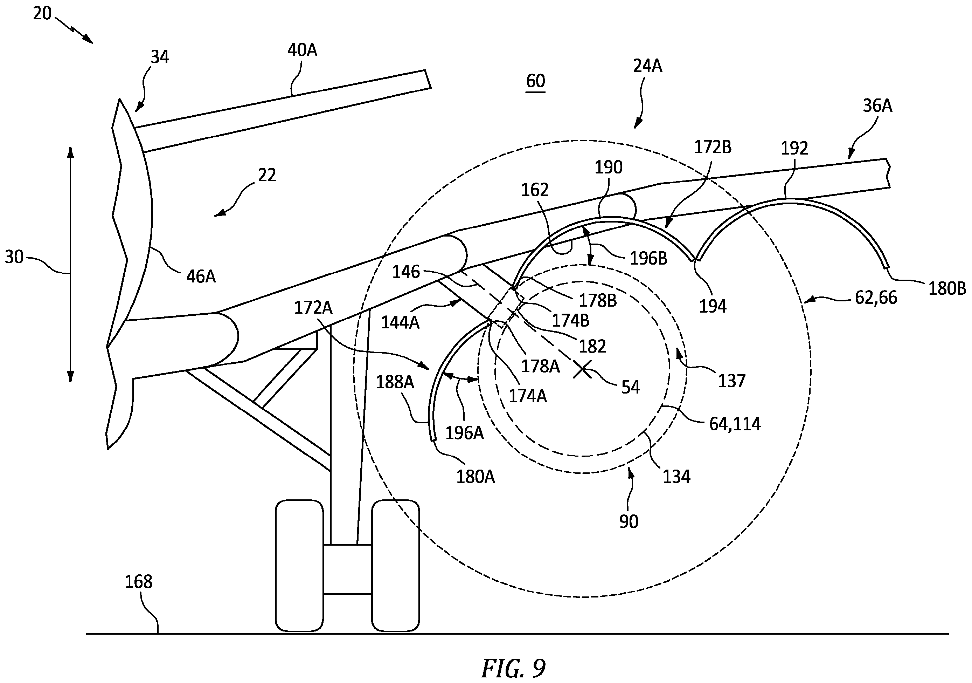

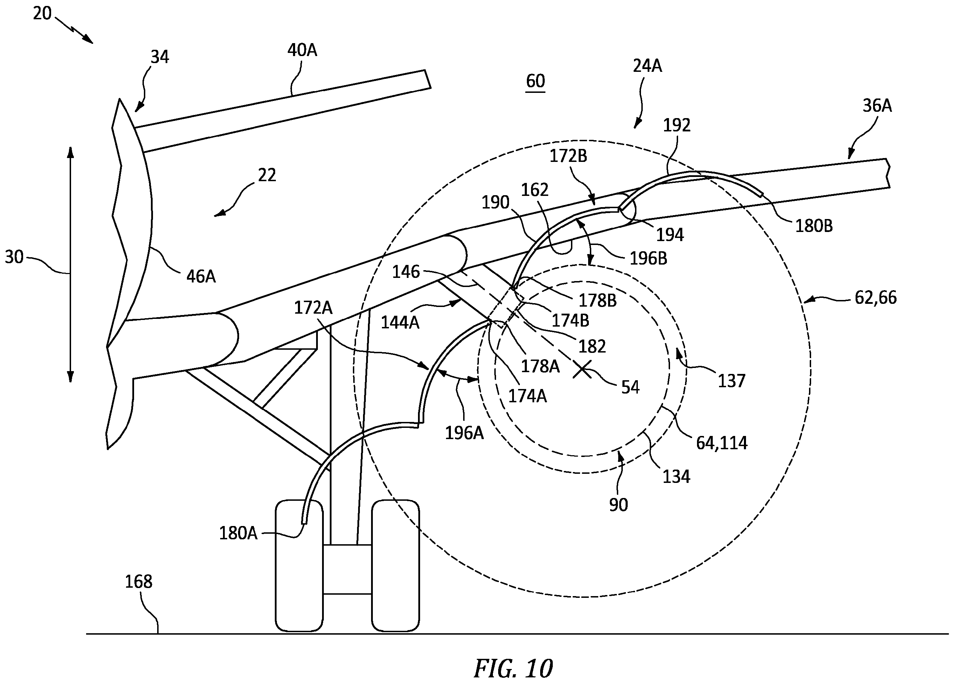

In some embodiments, referring to FIGS. 9 and 10, any one or more of the cowl doors 172 may each be configured as multi-panel folding door; e.g., a bi-folding door. The distal cowl door 172B of FIGS. 9 and 10, for example, includes an upper panel 190 and a lower panel 192. Each of these door panels 190, 192 extends axially between and to the opposing axial ends 184 and 186 of the respective cowl door 172 (see FIG. 2). The upper panel 190 is pivotally coupled to the stationary structure 182 at the upper door end 178B and is pivotable about the distal door pivot axis 174B. This upper panel 190 extends circumferentially from the upper door end 178B to an interface with the lower panel 192. At this interface, the lower panel 192 is pivotally coupled to the upper panel 190 at a distal door inter-panel pivot axis 194. The distal door inter-panel pivot axis 194 is disposed at an intermediate location circumferentially between the upper door end 178B and the lower door end 180B. The lower panel 192 extends circumferentially from the interface with the upper panel 190 to the lower door end 180B. With this configuration, the lower panel 192 may be pivoted with the upper panel 190 about the distal door pivot axis 174B. The lower panel 192 may also be pivoted about the distal door inter-panel pivot axis 194 relative to the upper panel 190. More particularly, the lower panel 192 may be pivoted about the distal door inter-panel pivot axis 194 in a direction away from the turbine engine 64 and its engine case 134 so as to provide additional room for opening the distal cowl door 172B as well as additional room for technician access. The proximal cowl door 172A of FIG. 10 may have a similar arrangement to the distal cowl door 172B of FIG. 10 as described above. Note, while each door panel 190, 192 is shown as pivoted open in FIGS. 9 and 10, it is contemplated the upper panel 190 may remain closed while the lower panel 192 is pivoted open. It is also contemplated the lower panel 192 may remain inline with (e.g., functionally fixed to) the upper panel 190 and these door panels 190 and 192 may (e.g., only) pivot about the distal door pivot axis 174B.

Referring to FIG. 7B, each cowl door 172A, 172B is configured to pivot a door pivot angle 196A, 196B (generally referred to as "196") about its door pivot axis 174A, 174B from its closed position (see FIG. 7A) to its open position. Note, where a cowl door includes multiple panels, the respective door pivot angle (e.g., 196B) may be measured relative to the pivoting movement of the respective upper panel (e.g., 190). In some embodiments, referring to FIGS. 7B-10, the distal door pivot angle 196B may be different than the proximal door pivot angle 196A. The distal door pivot angle 196B of FIG. 8, for example, is greater than the proximal door pivot angle 196A. By contrast, the proximal door pivot angle 196A of FIGS. 7B, 9 and 10 is greater than (or equal to) the distal door pivot angle 196B. In FIGS. 7B-10, a difference between the door pivot angles 196A and 196B may be selected to increase (e.g., maximize) technician access into the compartment 137. The difference between the door pivot angles 196A and 196B, for example, may be equal to or greater than fifteen degrees (15°), thirty degrees (30°), forty-five degrees (45°) or even sixty degrees (60°).

Referring to FIG. 7A, each cowl door 172A, 172B has a circumferential length extending circumferentially along the respective cowl door 172A, 172B from its upper door end 178A, 178B to its lower door end 180A, 180B. In some embodiments, referring to FIGS. 7A and 10, the circumferential length of the distal cowl door 172B may be equal to the circumferential length of the proximal cowl door 172A. In other embodiments, referring to FIGS. 8 and 9, the circumferential length of the distal cowl door 172B may be different than the circumferential length of the proximal cowl door 172A. The circumferential length of the distal cowl door 172B of FIGS. 8 and 9, for example, is greater than the circumferential length of the proximal cowl door 172A. A difference between the circumferential length of the distal cowl door 172B and the circumferential length of the proximal cowl door 172A may be equal to or greater than, for example, one-tenth times (0.1x), one-quarter times (0.25x), one-half times (0.5x) or even one times (1x) the proximal door length.

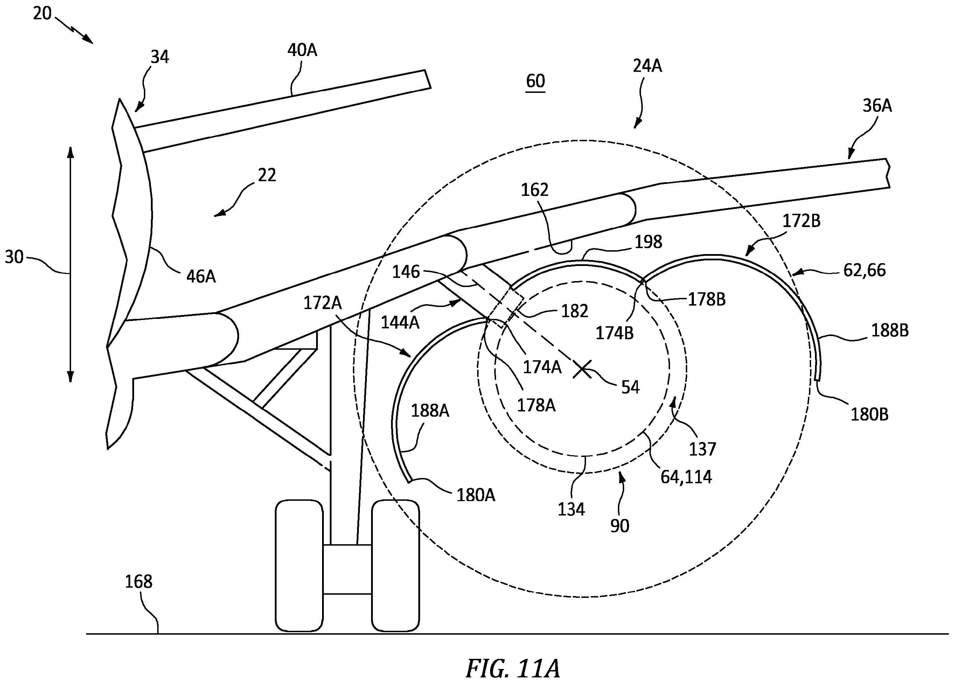

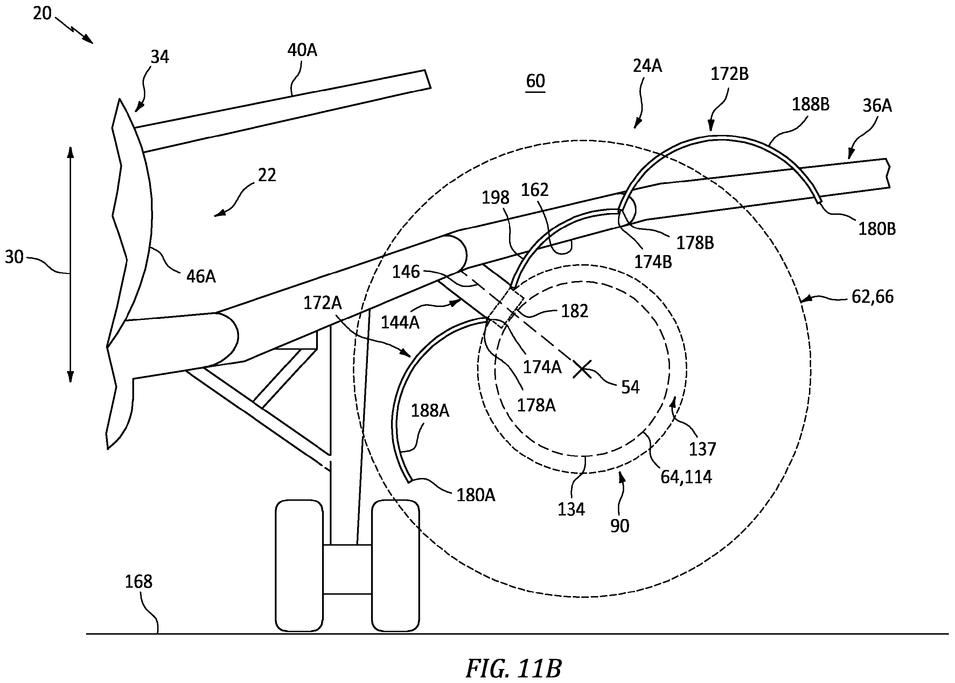

In some embodiments, referring to FIGS. 7B-10, each pylon structure 144 may be circumferentially centered between the respective door pivot axes 174A and 174B. The door pivot axes 174A and 174B of FIGS. 7B-10, for example, are disposed to opposing sides of the respective pylon structure 144. The door pivot axes 174A and 174B of FIGS. 7B-10 are also equispaced from the respective pylon structure 144. In other embodiments, referring to FIGS. 11A and 11B, each pylon structure 144 may be circumferentially offset between the respective door pivot axes 174A and 174B. The pylon structure 144 of FIGS. 11A and 11B, for example, may be disposed closer to one of the respective door pivot axes 174A, 174B than the other one of the respective door pivot axes 174B, 174A. The pylon structure 144 of FIGS. 11A and 11B, in particular, is disposed circumferentially closer to the proximal door pivot axis 174A than the distal door pivot axis 174B.

The nacelle structure 136 may also include an intermediate panel 198 spanning circumferentially between (a) the proximal cowl door 172A and its upper door end 178A and (b) the distal cowl door 172B and its upper door end 178B. In some embodiments, the intermediate panel 198 may be a fixed panel. The intermediate panel 198 of FIG. 11A, for example, is fixed to the stationary structure 182. This intermediate panel 198 may also form an intermediate structure coupling the distal cowl door 172B to the stationary structure 182, for example where the distal cowl door 172B is pivotally coupled to the intermediate panel 198. Note, while the intermediate panel 198 is fixed to the stationary structure 182, it is contemplated the intermediate panel 198 may be a removable panel to provide access to an area radially beneath the intermediate panel 198. In other embodiments, referring to FIG. 11B, the intermediate panel 198 may be a movable panel. The intermediate panel 198 of FIG. 11B, for example, may be pivotally coupled to the stationary structure 182. This intermediate panel 198 may also form an intermediate structure coupling the distal cowl door 172B to the stationary structure 182, for example where the distal cowl door 172B is pivotally coupled to the intermediate panel 198. Note, while both the distal cowl door 172B and the intermediate panel 198 are shown pivoted open in FIG. 11B, it is contemplated the intermediate panel 198 may typically remain closed while the distal cowl door 172B is pivoted open (e.g., similar to the arrangement shown in FIG. 11A). In this manner, the distal cowl door 172B may be pivoted open to access items subject to more frequent inspection, maintenance, etc.

In some embodiments, referring to FIGS. 7B-11B, one of the door pivot axes 174A, 174B may be positioned vertically above the other one of the door pivot axes 174B, 174A. The distal door pivot axis 174B of FIGS. 7B-11B, for example, is disposed vertically above the proximal door pivot axis 174A along the yaw axis 30 when, for example, the aircraft 20 is flying in (or close to) level flight and/or the aircraft 20 is on the ground (see FIG. 1). In other embodiments, it is contemplated the door pivot axes 174 may (or may not) be vertically aligned along the yaw axis 30 when, for example, the aircraft 20 is flying in (or close to) level flight and/or the aircraft 20 is on the ground (see FIG. 1).

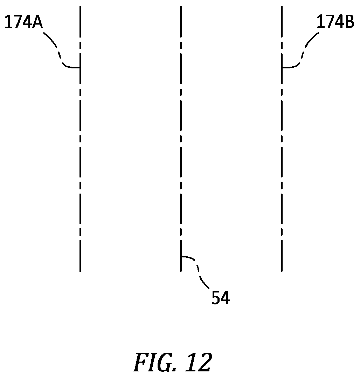

In some embodiments, referring to FIG. 12, the proximal door pivot axis 174A may be parallel with the distal door pivot axis 174B. The proximal door pivot axis 174A and/or the distal door pivot axis 174B may (or may not) also or alternatively be arranged parallel with the respective propulsion system axis 54.

Referring to FIG. 2, each aircraft propulsion system 24 may be configured such that one or more of its propulsion system members 66 and/or 68 are arranged upstream of the respective pylon structure 144. The pylon structure 144 of FIG. 2, for example, is disposed axially along the respective propulsion system axis 54 between (a) the propulsion section 62 and its members 66 and 68 and (b) the respective aircraft wing 36 and its leading edge 50. The present invention, however, is not limited to such an exemplary arrangement. For example, the pylon structure 144 may partially axially overlap or project axially forward of the guide vane structure 68.

The engine flowpath 108 of FIG. 2 extends longitudinally from the flowpath inlet 110, sequentially through the inlet section 102, the LPC section 103A, the HPC section 103B, the combustor section 104, the HPT section 105A, the LPT section 105B and the exhaust section 106, to the flowpath exhaust 112. The engine flowpath 108 of FIG. 2 is configured such that the core air and the combustion products generally flow in the aft, downstream direction towards the propulsion system aft end 58. The core air and the combustion products thereby flow along with the ambient air propelled by the rotating propulsor rotor 66 in a common axial direction - the downstream, aft direction. The turbine engine 64 of the present invention, however, is not limited to such an exemplary common flow engine arrangement. For example, the engine flowpath 108 may alternatively be configured such that the core air and the combustion products generally flow in a forward, upstream direction towards the propulsion system forward end 56. The core air and the combustion products may thereby flow in an opposite direction as the ambient air propelled by the rotating propulsor rotor 66. Here, the turbine engine 64 may have a reverse flow engine arrangement.

The aircraft propulsion system 24 of FIG. 2 and its propulsion section 62 are described above with a tractor configuration; e.g., where the propulsor rotor 66 is disposed at or otherwise near the propulsion system forward end 56. It is contemplated, however, the propulsion section 62 may alternatively be disposed at or otherwise near the propulsion system aft end 58 to provide a pusher fan configuration. Moreover, while the turbine engine 64 is described above with a particular two rotating structure arrangement, the present invention is not limited thereto. For example, the LPC rotor 116 may be omitted to configure the LPT rotor 119 as a power turbine (PT) rotor for the propulsor rotor 66. In another example, the turbine engine 64 may also include another rotating structure; e.g., an intermediate speed spool for the engine core 114.

The guide vane structure 68 is described above as a fixed (e.g., non-rotatable) guide vane structure. It is contemplated, however, the guide vane structure 68 may alternatively be selectively rotatable about the respective propulsion system axis 54. With such an arrangement, each aircraft propulsion system 24 may be configured as an open rotor propulsion system with a swirl recovery blade (SRB) open rotor architecture. More particularly, each aircraft propulsion system 24 may operate as: (A) a counter-rotating open rotor (CROR) propulsion system during a dual rotor mode of operation (e.g., when both the propulsor rotor 66 and the structure 68 are counter-rotating about the respective propulsion system axis 54); and (B) a single open rotor and swirl recovery vane (SRV) propulsion system during a single rotor mode of operation (e.g., when the propulsor rotor 66 is rotating and the structure 68 is rotationally fixed about the respective propulsion system axis 54). Note, when the guide vane structure 68 is configured to selectively rotate about the respective propulsion system axis 54, the moving guide vanes 86 operate as propulsor blades 74.

The aircraft propulsion system 24 of FIG. 2 and its propulsion section 62 are described as including the guide vane structure 68 with an SRV or SRB configuration. The present invention, however, is not limited to such an exemplary propulsion system configuration. For example, each aircraft propulsion system 24 may alternatively be configured without an open guide vane structure. Each aircraft propulsion system 24 may thereby be configured as a single rotor (SR) open rotor propulsion system. In another example, each aircraft propulsion system 24 may alternatively be configured with a set of the open propulsor rotors (e.g., counter-rotating propulsor rotors) operatively coupled to the turbine engine 64 (see FIG. 2) through the geartrain 132. Each aircraft propulsion system 24 may thereby be configured as a counter-rotating open rotor (CROR) propulsion system.

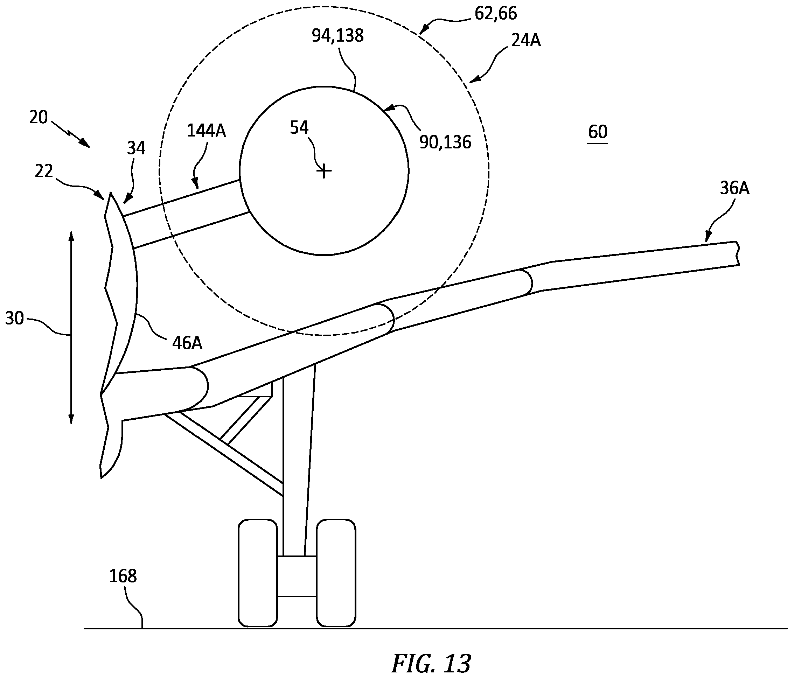

Though the aircraft propulsion systems 24 and the pylon structures 144 are described herein as being mounted to a respective one of the wings 36 of the aircraft 20, or a primary lift generating surface, the present invention is not limited to such an exemplary arrangement. Each pylon structure 144 and each aircraft propulsion system 24, for example, may alternatively be configured on a secondary lift surface, such as a substantially horizontal (e.g., within 5-10 degrees of horizontal) airfoil extending from the aircraft fuselage 34 forward of stabilizers 40, 38 and/or in lieu of at least one aircraft stabilizer; e.g., horizontal stabilizer 40. For example, referring to FIG. 13, each aircraft propulsion system 24 may alternatively be mounted to the aircraft fuselage 34 through its pylon structure 144.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A system for an aircraft (20), comprising:
an open propulsor rotor (66);
a turbine engine (64) configured to drive rotation of the open propulsor rotor (66), the turbine engine (64) extending axially along a centerline axis (54) of the turbine engine (64), and the turbine engine (64) including a compressor section (103), a combustor section (104) and a turbine section (105); and
a housing structure (90) including an engine case (134), a nacelle structure (136) and a compartment (137);
the engine case (134) housing the compressor section (103), the combustor section (104) and the turbine section (105);
the nacelle structure (136) including a first cowl door (172) and a second cowl door (172), the first cowl door (172) disposed to a first side of the engine case (134) and configured to pivot a first pivot angle (196) about a first pivot axis (174) between a first door closed position and a first door open position, the second cowl door (172) disposed to a second side of the engine case (134) and configured to pivot a second pivot angle (196) about a second pivot axis (174) between a second door closed position and a second door open position, the second pivot angle (196) greater than the first pivot angle (196), and the nacelle structure (136) housing and providing an aerodynamic cover over the engine case (134) when the first cowl door (172) is in the first door closed position and the second cowl door (172) is in the second door closed position; and
the compartment (137) formed by and extending radially between the engine case (134) and at least one of the first cowl door (172) or the second cowl door (172).

2. The system of claim 1, wherein:
the first pivot axis (174) is parallel with at least one of the centerline axis (54) or the second pivot axis (174); and/or
the second pivot angle (196) is at least fifteen degrees greater than the first pivot angle (196).

3. The system of claim 1 or 2, wherein:
the first pivot axis (174) is located vertically above the second pivot axis (174); or
the second pivot axis (174) is located vertically above the first pivot axis (174).

4. The system of any preceding claim, wherein:
the first cowl door (172) has a first circumferential length that extends circumferentially about the centerline axis (54) between opposing circumferential ends (178, 180) of the first cowl door (172) when the first cowl door (172) is in the first door closed position;
the second cowl door (172) has a second circumferential length that extends circumferentially about the centerline axis (54) between opposing circumferential ends (178, 180) of the second cowl door (172) when the second cowl door (172) is in the second door closed position; and
the second circumferential length is equal to the first circumferential length.

5. The system of any of claims 1 to 3, wherein:
the first cowl door (172) has a first circumferential length that extends circumferentially about the centerline axis (54) between opposing circumferential ends (178, 180) of the first cowl door (172) when the first cowl door (172) is in the first door closed position;
the second cowl door (172) has a second circumferential length that extends circumferentially about the centerline axis (54) between opposing circumferential ends (178, 180) of the second cowl door (172) when the second cowl door (172) is in the second door closed position; and
the second circumferential length is different than the first circumferential length.

6. The system of claim 5, wherein:
the second circumferential length is less than the first circumferential length; and/or
a difference between the second circumferential length and the first circumferential length is equal to or greater than 0.1 times the first circumferential length.

7. The system of any preceding claim, wherein:
the first cowl door (172) comprises a first panel (188) that extends circumferentially about the centerline axis (54) between opposing circumferential ends (178, 180) of the first cowl door (172) when the first cowl door (172) is in the first door closed position; and/or
the second cowl door (172) comprises a second panel (188) that extends circumferentially about the centerline axis (54) between opposing circumferential ends (178, 180) of the second cowl door (172) when the second cowl door (172) is in the second door closed position.

8. The system of any of claims 1 to 6, wherein:
the first cowl door (172) extends circumferentially about the centerline axis (54) between opposing circumferential ends (178, 180) of the first cowl door (172) when the first cowl door (172) is in the first door closed position, the first cowl door (172) includes a first door first panel (190) and a first door second panel (192), and the first door first panel (190) is pivotally coupled to the first door second panel (192) at a first inter-panel pivot axis (194) located circumferentially between the opposing circumferential ends (178, 180) of the first cowl door (172); and/or
the second cowl door (172) extends circumferentially about the centerline axis (54) between opposing circumferential ends (178, 180) of the second cowl door (172) when the second cowl door (172) is in the second door closed position, the second cowl door (172) includes a second door first panel (190) and a second door second panel (192), and the second door first panel (190) is pivotally coupled to the second door second panel (192) at a second inter-panel pivot axis (194) located circumferentially between the opposing circumferential ends (178, 180) of the second cowl door (172).

9. The system of any of claims 1 to 6, wherein:
the first cowl door (172) comprises a first panel (188) that extends circumferentially about the centerline axis (54) between opposing circumferential ends (178, 180) of the first cowl door (172) when the first cowl door (172) is in the first door closed position; and
the second cowl door (172) extends circumferentially about the centerline axis (54) between opposing circumferential ends of the second cowl door (172) when the second cowl door (172) is in the second door closed position, the second cowl door (172) includes a second door first panel (190) and a second door second panel (192), and the second door first panel (190) is pivotally coupled to the second door second panel (192) at an inter-panel pivot axis (194) located circumferentially between the opposing circumferential ends (178, 180) of the second cowl door (172).

10. The system of any preceding claim, further comprising a propulsion system (24) comprising the open propulsor rotor (66), the turbine engine (64) and the housing structure (90), and a pylon structure (144) mounted to the propulsion system (24), wherein:
the pylon structure (144) is circumferentially centered between the first pivot axis (174) and the second pivot axis (174); or
the pylon structure (144) is arranged circumferentially between the first pivot axis (174) and the second pivot axis (174) such that the pylon structure (144) is circumferentially closer to the first pivot axis (174) than the second pivot axis (174).

11. The system of any preceding claim, further comprising:
a propulsion system (24) comprising the open propulsor rotor (66), the turbine engine (64) and the housing structure (90); and
a pylon structure (144) mounted to the propulsion system (24) and projecting longitudinally along a pylon centerline (146) away from the propulsion system (24), the pylon centerline (146) circumferentially offset from a reference point (158) about the centerline axis (54) by an offset angle (160), the reference point (158) disposed at a top-dead-center location (152) of the housing structure (90), and the offset angle (160) comprising a non-zero acute angle.

12. The system of any preceding claim, wherein:
the first cowl door (172) is pivotally coupled to a stationary structure (182) at the first pivot axis (174) to a first side of the stationary structure (182); and
the second cowl door (172) is pivotally coupled to the stationary structure (182) at the second pivot axis (174) to a second side of the stationary structure (182).

13. The system of any of claims 1 to 11, wherein:
the first cowl door (172) is pivotally coupled to a stationary structure (182) at the first pivot axis (174) to a first side of the stationary structure (182), the nacelle structure (136) further includes an intermediate panel (198) fixed to the stationary structure (182) to a second side of the stationary structure (182), and the second cowl door (172) is pivotally coupled to the intermediate panel (198) at the second pivot axis (174); or
the first cowl door (172) is pivotally coupled to a stationary structure (182) at the first pivot axis (174) to a first side of the stationary structure (182), the nacelle structure (136) further includes an intermediate panel (198) pivotally coupled to the stationary structure (182) to a second side of the stationary structure (182), and the second cowl door (172) is pivotally coupled to the intermediate panel (198) at the second pivot axis (174).

14. A system for an aircraft (20), comprising:
an open propulsor rotor (66);
a turbine engine (64) configured to drive rotation of the open propulsor rotor (66), the turbine engine (64) extending axially along a centerline axis (54) of the turbine engine (64), and the turbine engine (64) including a compressor section (103), a combustor section (104) and a turbine section (105); and
a housing structure (90) including an engine case (134), a nacelle structure (136) and a compartment (137);
the engine case (134) housing the compressor section (103), the combustor section (104) and the turbine section (105);
the nacelle structure (136) including a first cowl door (172) and a second cowl door (172), the first cowl door (172) disposed to a first side of the engine case (134) and configured to pivot about a first pivot axis (174) between a first door closed position and a first door open position, the first cowl door (172) having a first circumferential length that extends circumferentially about the centerline axis (54) between opposing circumferential ends (178, 180) of the first cowl door (172) when the first cowl door (172) is in the first door closed position, the second cowl door (172) disposed to a second side of the engine case (134) and configured to pivot about a second pivot axis (54) between a second door closed position and a second door open position, the second cowl door (172) having a second circumferential length that extends circumferentially about the centerline axis (54) between opposing circumferential ends (178, 180) of the second cowl door (172) when the second cowl door (172) is in the second door closed position, the second circumferential length different than the first circumferential length, and the nacelle structure (136) housing and providing an aerodynamic cover over the engine case (134) when the first cowl door (172) is in the first door closed position and the second cowl door (172) is in the second door closed position; and
the compartment (137) formed by and extending radially between the engine case (134) and at least one of the first cowl door (172) or the second cowl door (172).

15. A system for an aircraft (20), comprising:
an open propulsor rotor (66);
a turbine engine (64) configured to drive rotation of the open propulsor rotor (66), the turbine engine (64) extending axially along a centerline axis (54) of the turbine engine (64), and the turbine engine (64) including a compressor section (103), a combustor section (104) and a turbine section (105); and
a housing structure (90) including an engine case (134), a nacelle structure (136) and a compartment (137);
the engine case (134) housing the compressor section (103), the combustor section (104) and the turbine section (105);
the nacelle structure (136) including a first cowl door (172) and a second cowl door (172), the first cowl door (172) disposed to a first side of the engine case (134) and configured to pivot about a first pivot axis (174) between a first door closed position and a first door open position, the second cowl door (172) disposed to a second side of the engine case (134) and configured to pivot about a second pivot axis (174) between a second door closed position and a second door open position, and the nacelle structure (136) housing and providing an aerodynamic cover over the engine case (134) when the first cowl door (172) is in the first door closed position and the second cowl door (172) is in the second door closed position, wherein at least one of the first cowl door (172) or the second cowl door (172) is configured as a multi-panel folding door; and
the compartment (137) formed by and extending radially between the engine case (134) and at least one of the first cowl door (172) or the second cowl door (172).
